# FASCICULE DE BREVET EUROPEEN

(11) **EP 4 544 246 B1**
(45) Date de publication et mention de la délivrance du brevet: **02.09.2026**
(21) Numéro de dépôt: 23732065.0
(22) Date de dépôt: 09.06.2023
(51) Int. Cl.: F25J 1/00

(54) **PROCEDE DE COMPRESSION DE DIOXYDE DE CARBONE AVEC COMPRESSION POLYPHASIQUE ET POMPE SUPERCRITIQUE**
VERFAHREN ZUR KOMPRIMIERUNG VON KOHLENDIOXID MIT MEHRSTUFIGER KOMPRIMIERUNG UND ÜBERKRITISCHER PUMPE
METHOD FOR COMPRESSING CARBON DIOXIDE WITH MULTI-STAGE COMPRESSION AND SUPERCRITICAL PUMP

(30) Priorité: 24.06.2022 FR 2206336
(43) Date de publication de la demande: 30.04.2025
(73) Titulaire: IFP Energies nouvelles, 92500 Rueil-Malmaison (FR)
(72) Inventeur: MOENNE LOCCOZ, Victor, 92852 RUEIL-MALMAISON CEDEX (FR)
(74) Mandataire: IFP Energies nouvelles
(86) Numéro de dépôt international: PCT/EP2023/065509
(87) Numéro de publication internationale: WO 2023/247218

(56) Documents cités:
- EP-A2- 2 474 800
- FR-A1- 2 891 609
- JP-A- 2010 266 154
- US-A1- 2013 081 409

## Description

### Domaine technique

L'invention concerne le domaine de la compression de dioxyde de carbone en vue de son transport et de sa séquestration (stockage).

Dans le cadre de la lutte contre le réchauffement climatique, des efforts importants sont nécessaires en vue de réduire la quantité de dioxyde de carbone (CO₂) relâchée dans l'atmosphère. Le développement d'installations de capture et de stockage de CO₂ fait partie des voies les plus prometteuses pour diminuer drastiquement les émissions des industries les plus polluantes et permettre une transition énergétique douce. Ces systèmes ont pour objectifs de capturer, traiter le CO₂ émis par ces industries et de le séquestrer dans le sous-sol, dans des couches géologiques adéquates ou dans des réservoirs artificiels.

### Technique antérieure

Les techniques connues pour stocker le dioxyde de carbone capturé consistent à comprimer le dioxyde de carbone sous forme gazeuse puis à le refroidir pour le transformer en phase liquide ou en phase supercritique en vue de son transport et de son stockage.

La demande de brevet WO2011/101296 concerne un procédé de compression du dioxyde de carbone en le maintenant en phase gazeuse. La pression du gaz est augmentée par des étages de compression successifs jusqu'à dépasser la pression critique. L'écoulement est ensuite refroidi à la température souhaitée pour le transport.

La demande de brevet JP2010/266154 concerne un procédé de compression du dioxyde de carbone à l'état gazeux jusqu'à une pression strictement inférieure à la pression critique. Le dioxyde de carbone est ensuite refroidi jusqu'à un état totalement liquide. Il est alors comprimé à l'état liquide jusqu'à atteindre la pression critique. Le document US2013/081409A1 divulgue un procédé selon le préambule de la revendication 1.

Pour ces procédés, le dioxyde de carbone nécessite un niveau de pureté très élevé, les impuretés pouvant d'une part générer une perte de rendement et/ou une détérioration des systèmes de compression monophasiques (liquide ou gaz), et d'autre part modifier les caractéristiques de changement de phase du fluide (notamment le point critique de passage à l'état supercritique).

On connait également la demande de brevet FR 2 891 609 (US2009075219) de la demanderesse qui comprend un procédé de captage de dioxyde de carbone et de sa compression à l'aide d'une pompe polyphasique.

Toutefois, dans ce procédé, le passage à l'état supercritique se fait au sein même de la pompe polyphasique, ce qui n'est pas optimal pour le fonctionnement de la pompe et du procédé.

### Résumé de l'invention

L'objectif de l'invention consiste à proposer un procédé et un système de compression d'un fluide comprenant du dioxyde de carbone et pouvant comporter un fort taux d'impuretés (préférentiellement au moins 5% d'impuretés), y compris des gaz incondensables, avec un rendement énergétique amélioré.

Pour y répondre, l'invention concerne un procédé de compression d'un fluide comprenant au moins 80% de dioxyde de carbone, le procédé comprenant au moins les étapes suivantes :
a) on comprime le fluide par un ou plusieurs étages de compression jusqu'à une pression supérieure à 8 bar et strictement inférieure à 50 bar ;
b) on refroidit le fluide comprimé à une température comprise entre -50°C et 15°C, la pression du fluide étant maintenue supérieure à 8 bar et strictement inférieure à 50 bar de manière à liquéfier partiellement le dioxyde de carbone du fluide, la fraction volumique en gaz du fluide étant comprise entre 1% et 99% ;
c) on réalise une compression polyphasique du fluide comprimé et refroidi à une pression strictement inférieure à la pression critique du fluide, la compression polyphasique étant réalisée en un ou plusieurs étages de compression polyphasique ;
d) de préférence, on refroidit le fluide sortant de la compression polyphasique pour liquéfier totalement au moins le dioxyde de carbone du fluide ;
e) on comprime le fluide de manière à ce que la pression du fluide dépasse le point critique du fluide et de préférence à une température inférieure à 60 °C.

Avantageusement, on comprime le fluide à l'étape a) à l'aide d'un unique compresseur à engrenages intégrés.

De préférence, entre au moins deux étages de compression de l'étape a), on refroidit le fluide pour le maintenir à une température entre 10°C et 100°C.

De manière avantageuse, après avoir refroidi le fluide après au moins un étage de compression de l'étape a), on sépare le fluide à l'état liquide du fluide à l'état gazeux.

Selon une configuration de l'invention, la compression polyphasique est réalisée par une pompe polyphasique de type hélico-axiale.

Préférentiellement, la compression polyphasique est réalisée par plusieurs étages de compression polyphasique et de préférence, on refroidit le fluide par des refroidisseurs, de préférence, des refroidisseurs à eau, entre au moins deux étages de compression polyphasique.

Selon une mise en œuvre de l'invention, le fluide est du dioxyde de carbone comprenant entre 0 et 20% d'impuretés.

Selon une variante de l'invention, après l'étape d) de refroidissement du fluide sortant de la compression polyphasique, lorsque les impuretés comprennent des gaz non condensables, on réalise un traitement du fluide pour réduire la fraction volumique en gaz à une valeur inférieure à 5%, de préférence, par une séparation gaz/liquide.

L'invention concerne aussi un procédé de transport et de stockage d'un fluide comprenant au moins 80% de dioxyde de carbone, dans lequel on comprime le fluide selon le procédé de compression tel que décrit précédemment, puis on transporte le fluide jusqu'à un site de stockage et on stocke le fluide dans un réservoir de stockage du site de stockage.

D'autres caractéristiques et avantages du procédé et/ou du système selon l'invention, apparaîtront à la lecture de la description ci-après d'exemples non limitatifs de réalisations, en se référant aux figures annexées et décrites ci-après.
La figure 1 représente un système de compression d'un fluide selon l'invention.
La figure 2 illustre un procédé de compression d'un fluide selon l'invention.
La figure 3 compare le chemin thermodynamique du procédé de compression selon l'invention (chemin (c)) aux chemins thermodynamiques des procédés de compression de l'art antérieur (chemins (a) et (b)).
La figure 4 illustre différentes courbes de saturation gaz/liquide pour différents fluides comprenant du dioxyde de carbone.

### Description des modes de réalisation

La présente invention constitue un maillon de la chaîne de capture et du stockage du CO₂ appelé « conditionnement » ou « compression ». L'objectif est de porter le CO₂ capturé de ses conditions de capture (par exemple pression comprise entre 1 et 3 bar (entre 0,1 et 0,3 MPa), et de préférence entre 1 et 1,5 bars (0,1 à 0,15 MPa), et température comprise entre 10 et 50°C, et de préférence entre 10 et 35°C, le dioxyde de carbone pouvant comprendre différents types et taux d'impuretés selon l'endroit de sa capture) à des conditions supercritiques (pression supérieure à la pression supercritique, par exemple 74 bar, soit 7,4 MPa, pour le dioxyde de carbone pur ou presque pur, et température comprise entre 0°C et 60°C) en vue de son transport et de sa séquestration.

Pour atteindre cet objectif, l'invention concerne un procédé et un système innovants de compression du CO₂ comportant notamment une pompe polyphasique. Il permet de comprimer du CO₂ malgré un fort taux d'impuretés (supérieure à 5% en volume) en son sein. Ce procédé est également optimisé du point de vue énergétique en fonction du flux issu de la capture.

Par impuretés, on entend toute molécule distincte d'une molécule de CO₂. Les impuretés peuvent être des particules solides, liquides ou gazeuses : elles peuvent notamment concerner des gaz incondensables, par l'exemple le diazote ou le dihydrogène.

Par « dioxyde de carbone pur ou presque pur », on entend moins d'1% d'impuretés dans le dioxyde de carbone.

Par « taux d'impuretés », on entend la fraction volumique des impuretés dans le fluide.

Par « gaz incondensable », on entend un gaz pour lequel la température de liquéfaction est une température cryogénique, par exemple inférieure à -150°C.

Le point critique est le point correspondant aux pression et température où le fluide passe à l'état supercritique. La pression critique est la pression minimale à partir de laquelle le fluide peut passer à l'état supercritique ; la température critique est la température minimale à partir de laquelle le fluide peut passer à l'état supercritique.

On appelle « pompe polyphasique » un dispositif de compression d'un fluide arrivant en entrée du dispositif de compression sous forme polyphasique avec au moins une phase gazeuse et au moins une phase liquide. La pompe polyphasique peut notamment correspondre aux pompes polyphasiques hélico-axiales décrites dans les demandes de brevet FR 2,665,224 (US5375976), FR 2,899,944 (US2009311094) ou FR 3,010,463 (US2016222977). La pompe polyphasique peut comprendre alors un ou plusieurs étages de compression polyphasique. La pompe polyphasique peut comporter au moins une roue mobile en rotation autour d'un axe et montée dans un carter et au moins une roue fixe solidaire du carter, ladite roue mobile comportant un moyeu muni d'au moins deux pales de manière à former au moins deux canaux délimités par le moyeu, le carter et deux desdites pales, et lesdits canaux possèdent une partie centrifuge. La pompe polyphasique peut aussi correspondre à une pompe a engrenage ou tout autre type de technologie de pompage polyphasique.

On appelle « pompe supercritique » un dispositif de compression d'un fluide arrivant et sortant à l'état supercritique ou arrivant en phase liquide et sortant de la pompe supercritique à l'état supercritique. Sans se limiter à ces exemples, les technologies utilisées peuvent être les suivantes : pompe à membrane, pompe à engrenage, pompes à rotor noyées, pompe péristaltique.

La pompe polyphasique peut être constituée d'un ou plusieurs étages polyphasiques suivis d'un ou plusieurs étages non-hélico-axiaux de manière à permettre un fluide à l'état supercritique en sortie de la pompe polyphasique. Ainsi, la pompe polyphasique est également une pompe supercritique.

L'invention concerne un procédé de compression d'un fluide comprenant au moins 80% de dioxyde de carbone. En d'autres termes, le fluide peut être du dioxyde de carbone comprenant entre 0 et 20% d'impuretés.

Avantageusement, le fluide peut comprendre entre 5% et 20% d'impuretés.

A son entrée dans le procédé de compression, le fluide peut avoir une pression comprise entre 1 et 3 bar (0,1 à 0,3 MPa) et de préférence entre 1 et 1,5 bar (0,1 à 0,15 MPa), soit une pression proche de la pression atmosphérique, et une température comprise entre 10°C et 50°C, de préférence entre 10 et 35°C.

Selon l'invention, le procédé comprend au moins les étapes suivantes : a) on comprime le fluide par un ou plusieurs étages de compression jusqu'à une pression supérieure à 8 bar (0,8 MPa) et strictement inférieure à 50 bar (5 MPa). Cette plage de pression revêt une importance pour l'amélioration du rendement énergétique du procédé. En effet, en dessous de 8 bar (0,8 MPa) de pression, les températures de liquéfaction du dioxyde de carbone sont inférieures à -50°C. De ce fait, le refroidissement pour la liquéfaction partielle du dioxyde de carbone nécessite une consommation énergétique importante. Par ailleurs, au-delà de 50 bar (5 MPa), l'utilisation d'une compression polyphasique perd son intérêt car la pression serait alors trop proche de la pression critique (74 bar, soit 7,4 MPa, pour le dioxyde de carbone pur ou presque pur).

L'utilisation de plusieurs étages de compression permet d'améliorer le rendement global de compression.

De préférence, on peut comprimer le fluide à une pression comprise entre 10 et 30 bar (1 à 3 MPa), et de manière encore préférée entre 12 et 20 bar (1,2 à 2 MPa), ces plages de valeurs permettant une meilleure réduction de la consommation énergétique du procédé.

En sortie du dernier étage de compression, la température du fluide peut par exemple être comprise entre 10°C et 100°C.
b) on refroidit le fluide comprimé à une température comprise entre -50°C et 15°C, la pression du fluide étant maintenue, pendant le refroidissement, sensiblement à la pression de l'étape a) ou en variant légèrement tout en restant supérieure à 8 bar (0,8 MPa) et strictement inférieure à 50 bar (5 MPa) de manière à liquéfier partiellement le dioxyde de carbone du fluide, la fraction volumique en gaz du fluide étant comprise entre 1% et 99% en sortie de refroidissement. De préférence, on peut refroidir le fluide comprimé à une température supérieure à -50°C et strictement inférieure à 0°C, ce qui permet encore de réduire la consommation énergétique du procédé.

Par liquéfaction partielle, on entend que le fluide est polyphasique comprenant une portion sous forme gazeuse et une autre portion sous forme liquide, c'est-à-dire que le fluide n'est pas totalement liquéfié mais qu'il subsiste une partie du fluide sous forme gazeuse (au moins 1% par exemple). La fraction volumique en gaz du fluide peut avantageusement être comprise entre 50% et 95%, et de manière encore préférée entre 60 et 90%, ces proportions permettant d'améliorer les performances énergétiques du procédé.
c) on réalise une compression polyphasique du fluide comprimé et refroidi à une pression strictement inférieure à la pression critique du fluide, par exemple au moyen d'une pompe polyphasique. De ce fait, le fluide reste en état polyphasique avec une portion gazeuse et une portion liquide, ce qui permet d'améliorer le rendement de la pompe polyphasique. La compression polyphasique peut être réalisée en un ou plusieurs étages de compression polyphasique, en fonction des pressions d'entrée et de sortie de la pompe polyphasique notamment. En sortie de la compression polyphasique, la température du fluide peut être comprise entre 0 et 60°C. L'utilisation de la compression polyphasique permet d'accepter du dioxyde de carbone avec un fort taux d'impuretés : par exemple, le fluide peut comprendre au moins 5% d'impuretés, ce qui n'est pas le cas des systèmes et procédés de l'art antérieur où la compression est seulement monophasique. Ainsi, le procédé de l'invention peut accepter le gaz tel que capturé, sans nécessiter de traitement préalable du fluide pour éliminer les impuretés. Cela permet de simplifier le procédé global et de réduire le coût global de stockage du dioxyde de carbone.
d) de préférence, on refroidit le fluide sortant de la compression polyphasique pour liquéfier totalement au moins le dioxyde de carbone du fluide. Autrement dit, l'étape d) est optionnelle. En effectuant l'étape d), en sortie du refroidissement, le dioxyde de carbone du fluide est entièrement à l'état liquide et les impuretés peuvent être liquides ou gazeuses. Le passage à l'état liquide du dioxyde de carbone permet de faciliter l'étape suivante qui consiste à mettre le fluide à l'état supercritique. Ainsi, comme l'étape suivante est facilitée, les performances énergétiques du procédé sont également améliorées.
e) on comprime le fluide de manière que la pression du fluide dépasse le point critique (la pression critique) du fluide, de préférence au moyen d'une pompe supercritique. En ayant liquéfié totalement au préalable le dioxyde de carbone, le passage à l'état supercritique dans la pompe supercritique est facilité. De préférence, en sortie de la pompe supercritique, la température du fluide est inférieure à 60 °C, de manière à limiter les pertes thermiques pour le transport et/ou le stockage ultérieur du fluide.

Avantageusement, à l'étape a), on peut comprimer le fluide à l'aide de compresseurs à engrenages intégrés, ce type de compresseur étant adapté à la comprise d'un fluide gazeux.

Selon une variante de l'invention, entre au moins deux étages de compression de l'étape a), on peut refroidir le fluide, par un moyen de refroidissement tel qu'un échangeur de chaleur, pour le maintenir à une température entre 10°C et 100°C. Le refroidissement peut être réalisé par un échangeur de chaleur direct ou indirect par exemple. En refroidissant le fluide avant l'étage de compression suivant, on évite de trop grandes températures au fluide, ce qui limite le refroidissement ultérieur du fluide et permet de faire fonctionner les différents moyens de compression (des compresseurs notamment) de chaque étage à une température proche de la température de fonctionnement et donc proche de leurs rendements nominaux.

Dans cette variante, on peut de préférence séparer les parties gazeuses et liquides du fluide après avoir refroidi le fluide après au moins un étage de compression, de l'étape a).

Ainsi, lorsqu'on refroidit le fluide après un étage de compression, on peut avantageusement séparer le liquide contenu dans le fluide après cette étape de refroidissement. En effet, lorsqu'on refroidit le fluide, la quantité de liquide augmente par condensation, l'étape de séparation peut donc être utile après le refroidissement, de manière éliminer au maximum le liquide avant l'étage de compression suivant, et ainsi protéger au mieux le prochain moyen de compression. Par exemple, on peut séparer le liquide contenu dans le fluide après chaque refroidissement réalisé après chaque étage de compression, de manière à éviter d'endommager le moyen de compression de l'étage suivant.

Avantageusement, la compression polyphasique de l'étape c) peut être réalisée par une pompe polyphasique de type hélico-axiale. Ce type de pompe permet un bon rendement de compression avec de fortes variations possibles de fraction de gaz du fluide.

Selon une mise en œuvre de l'invention, lors de la compression polyphasique de l'étape c), on peut refroidir le fluide par des refroidisseurs, de préférence, des refroidisseurs à eau, entre au moins deux étages de compression polyphasique. De ce fait, on limite l'augmentation de température, ce qui permet d'éviter des températures trop élevées, et des pertes thermiques associées. Cela permet également d'augmenter le taux de liquide en entrée des étages suivants de compression polyphasique.

De manière avantageuse, le fluide peut être du dioxyde de carbone comprenant entre 0 et 20% d'impuretés, de préférence comprenant entre 5% et 20% d'impuretés. De ce fait, il est possible d'utiliser le procédé de compression directement après le captage sans avoir à prétraiter le fluide pour limiter le taux d'impuretés à une fraction très faible (inférieure à 5%).

De manière préférée, après l'étape d) de refroidissement du fluide sortant de la compression polyphasique, lorsque les impuretés comprennent des gaz non condensables (notamment avec une fraction volumique des gaz non condensables supérieure à 5%), on peut réaliser un traitement du fluide pour réduire la fraction volumique en gaz à une valeur inférieure à 5%, de préférence, par une séparation gaz/liquide.

Par exemple, pour réaliser ce traitement destiné à réduite la fraction volumique en gaz à une valeur inférieure à 5%, on peut séparer le fluide à l'état gazeux du fluide à l'état liquide après l'étape de refroidissement de l'étape d) : on peut séparer le gaz contenu dans le fluide, notamment les gaz incondensables, de manière à limiter le taux de gaz dans le fluide et ainsi à optimiser le fonctionnement de la pompe supercritique.

L'invention concerne également un procédé de transport et de stockage d'un fluide comprenant au moins 80% de dioxyde de carbone (de préférence, le fluide est du dioxyde de carbone avec 5% à 20% d'impuretés), dans lequel on comprime le fluide selon le procédé de compression tel que décrit précédemment, puis on transporte le fluide jusqu'à un site de stockage et on stocke le fluide dans un réservoir de stockage du site de stockage. Le réservoir de stockage peut être un réservoir artificiel ou un réservoir naturel tel qu'un réservoir géologique, par exemple un réservoir qui contenait du pétrole ou du gaz naturel.

Grâce au procédé de compression de l'invention, le fluide ne peut être prétraité que par des séparateurs gaz/liquide ce qui simplifie le pré-traitement, qui permet d'abaisser les coûts de transport et de stockage et limiter la consommation énergétique.

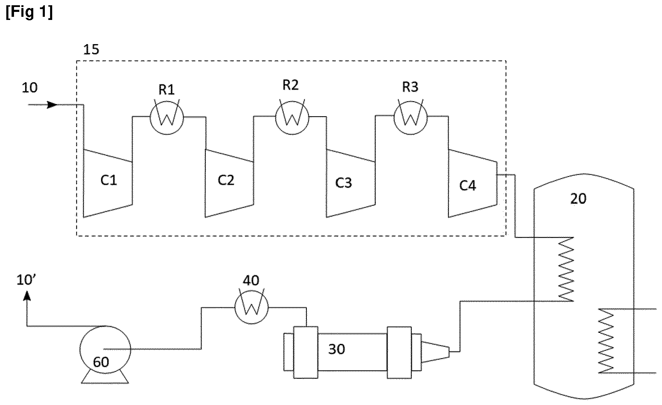

La figure 1 illustre de manière schématique et non limitative un système de compression selon un mode de réalisation de l'invention.

Le système comprend plusieurs compresseurs C1, C2, C3 et C4 en série (ici on a quatre compresseurs mais le système pourrait avoir un nombre différent de compresseurs).

Les compresseurs C1, C2, C3 et C4 permettent la montée en pression progressive d'un flux de fluide 10 comprenant au moins 80% de dioxyde de carbone. Ce fluide peut notamment provenir de l'échappement des gaz en sortie d'une chambre de combustion ou de toute autre équipement industriel produisant du dioxyde de carbone avec potentiellement jusqu'à 20% d'impuretés. Ainsi, depuis l'amont dans le sens de circulation du fluide, le fluide est d'abord comprimé dans le compresseur C1, puis dans le compresseur C2 puis dans le compresseur C3 et enfin dans le compresseur C4. En sortie du dernier compresseur C4 traversé par le flux de fluide, le fluide atteint la pression souhaitée, entre 8 et 50 bar, soit entre 0,8 et 5 MPa (50 bar, soit 5 MPa, exclu).

Les compresseurs C1, C2, C3 et C4 sont séparés par des refroidisseurs, ici sous la forme de premiers échangeurs de chaleur sans contact direct R1, R2 et R3 (de manière à ne pas modifier la composition du fluide). Des séparateurs gaz/liquide (non représentés) peuvent également mis en place juste après chaque refroidisseur R1, R2 et R3 pour éliminer le fluide condensé à l'état liquide, avant d'atteindre le compresseur suivant C2, C3 ou C4.

Par échangeurs de chaleur sans contact direct ou à contact indirect, on entend que le fluide échange de la chaleur avec un fluide caloporteur sans contact direct entre le fluide et le fluide caloporteur : par exemple, cet échange de chaleur sans contact direct peut se faire par une paroi, le fluide étant d'un côté de la paroi et le fluide caloporteur de l'autre côté de la paroi. Ce peut être notamment le cas d'un échangeur à tubes ou à plaques.

Les refroidisseurs R1, R2 et R3 permettent de maintenir la température du fluide à une température prédéterminée, par exemple entre 10 et 100°C.

L'ensemble constitué des compresseurs C1, C2, C3 et C4 et des premiers échangeurs de chaleur sans contact direct R1, R2 et R3 forme un dispositif de compression 15.

En sortie du dispositif de compression 15 (donc du dernier compresseur C4), le fluide entre dans un premier moyen de refroidissement 20 pour liquéfier partiellement le fluide. Ce moyen de refroidissement peut être un échangeur de chaleur, de préférence sans contact direct.

Ainsi, le fluide est refroidi et partiellement liquéfié. En sortie du premier moyen de refroidissement, le fluide comprend une portion de gaz et une portion de liquide. Il est donc polyphasique et peut ainsi entrer dans la pompe polyphasique 30 qui va permettre une augmentation de la pression à une valeur prédéterminée inférieure à la pression critique du fluide. En utilisant une pompe polyphasique 30, le fluide en entrée peut être un dioxyde de carbone avec un fort taux d'impuretés (par exemple entre 5 et 20% d'impuretés), ce qui permet d'éviter des dispositifs de pré-traitement du fluide en entrée. De plus, ces impuretés peuvent notamment être des gaz incondensables puisque la pompe polyphasique est conçue pour accepter un taux de gaz élevé (au moins 50%, de préférence compris entre 75% et 95%).

Le fluide polyphasique comprimé est alors refroidi dans un deuxième moyen de refroidissement 40 tel qu'un échangeur de chaleur, à une température prédéterminée, de préférence comprise entre 0°C et 60°C pour liquéfier totalement le dioxyde de carbone du fluide. Ce deuxième moyen de refroidissement 40 est néanmoins optionnel. En sortie du deuxième moyen de refroidissement 40, le fluide ne comprend que du dioxyde de carbone sous forme liquide. Il est alors entraîné dans une pompe supercritique 60 pour atteindre la pression critique et ainsi passer à l'état supercritique 10' où il peut par la suite être transporté via des conduites de transport par exemple et stocké dans un réservoir géologique ou artificiel. Optionnellement, un moyen de séparation gaz/liquide (un séparateur gaz/liquide par exemple) peut être positionné entre le deuxième moyen de refroidissement 40 et la pompe supercritique 60 de manière à éliminer les gaz ou à réduire la quantité de gaz contenu dans le fluide à une fraction volumique inférieure à 5% pour faciliter le fonctionnement de la pompe supercritique 60 et pour améliorer ses performances.

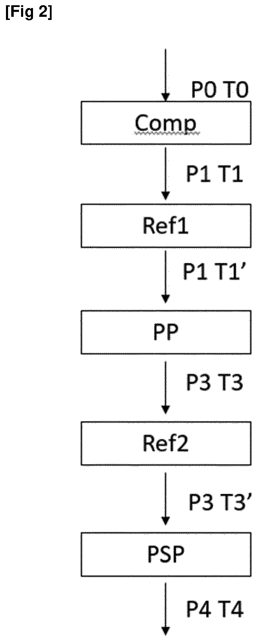

La figure 2 illustre, de manière schématique et non limitative un procédé de compression selon l'invention.

Le fluide comprenant au moins 80% de dioxyde de carbone arrive à une pression P0 (par exemple entre 1 et 3 bar) et à une température T0 (par exemple entre 10 et 50°C) dans un dispositif de compression comprenant un ou plusieurs étages de compression. Le fluide est alors comprimé Comp jusqu'à une pression P1 (supérieure à 8 bar et strictement inférieure à 50 bar) et à une température T1 (par exemple entre 10 et 100°C). Le fluide est alors refroidi Ref1 afin qu'il subisse une liquéfaction partielle. En sortie de l'étape Ref1, le fluide est polyphasique et comprend à la fois une portion gazeuse et une portion liquide et se trouve à la pression P1 et à une température T1' (par exemple entre -50°C et 15°C) inférieure à T1.

Comme le fluide est alors polyphasique, il peut être comprimé dans une pompe polyphasique PP où il ressort à la pression P3 (par exemple entre 65 et 100 bar, soit entre 6,5 et 10 MPa) et à la température T3 (par exemple entre 0 et 60°C). La pression P3 est strictement inférieure à la pression critique du fluide de manière à éviter le passage à l'état supercritique dans la pompe polyphasique.

En sortie de la compression polyphasique PP, le fluide est optionnellement refroidi Ref2 pour liquéfier totalement au moins le dioxyde de carbone contenu dans le fluide. Ainsi, il ressort à la pression P3 et à une température T3' inférieure à T3.

Si besoin, le fluide peut alors être séparé dans un moyen de séparation gaz/liquide afin de réduire la fraction de gaz à une valeur inférieure à 5%. Cette étape est particulièrement avantageuse lorsque le fluide comprend plus de 5% de gaz incondensables.

Le fluide, soit sortant directement de l'étape de refroidissement Ref2 comme illustré, soit sortant de l'étape optionnelle de séparation gaz liquide, est alors comprimé dans une pompe supercritique PSP où il passe à l'état supercritique. Il ressort ainsi à l'état supercritique à une pression P4 (par exemple entre 74 et 200 bar, soit entre 7,4 et 20 MPa) supérieure à la pression critique du fluide et à la température T4.

Il peut ensuite être transporté et stocké par exemple dans un réservoir artificiel ou géologique.

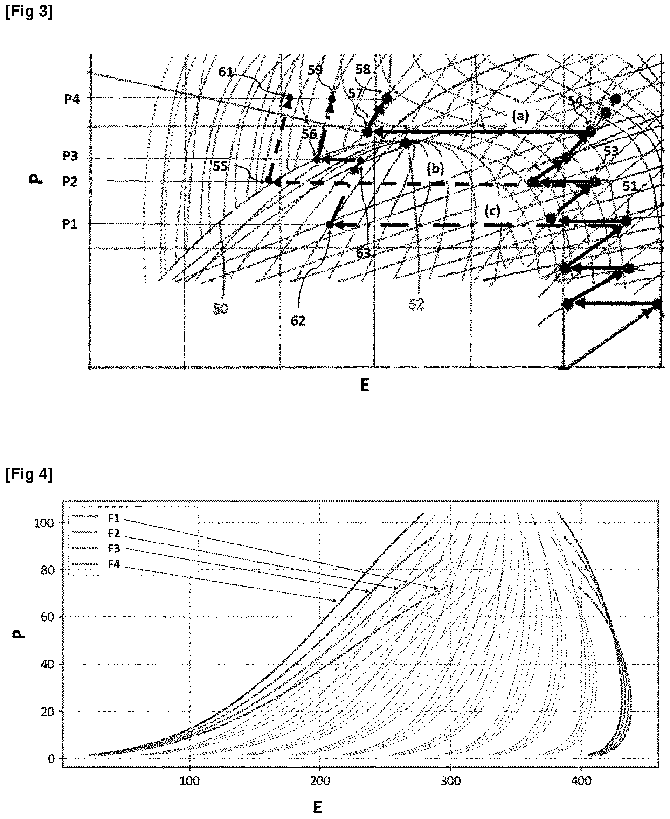

La figure 3 illustre, de manière schématique et non limitative, une comparaison entre les chemins thermodynamiques (a) et (b) de deux procédés de compression de dioxyde de carbone de l'art antérieur et un chemin thermodynamique (c) d'un procédé de compression de fluide comprenant au moins 80% de dioxyde de carbone selon l'invention.

Le chemin thermodynamique (a) est représenté par les flèches en lignes continues ; le chemin thermodynamique (b) est représenté par les flèches en trait pointillés et le chemin thermodynamique (c) est représenté par les flèches en traits mixtes.

Pour les chemins thermodynamiques (b) et (c), la première partie du chemin est identique au chemin thermodynamique (a) et ne sont représentés par les flèches en traits pointillés ou mixtes que la partie du chemin qui s'écartent du chemin thermodynamique (a).

Le chemin thermodynamique (a) correspond au chemin thermodynamique de la demande de brevet WO 2011/101296 de l'art antérieur alors que le chemin thermodynamique (b) correspond au chemin thermodynamique de la demande de brevet JP 2010/266154 de l'art antérieur.

Le chemin thermodynamique (a) se caractérise par une succession de compressions suivies de refroidissements où le fluide est maintenu à l'état gazeux (à droite et à l'extérieur de l'enveloppe caractérisée par la courbe de saturation 50 du fluide).

Une fois que le fluide sous forme gazeuse (sans portion liquide) atteint une pression (point 54) supérieure à la pression du point critique 52, le fluide est refroidi jusqu'au point 57 II est ensuite comprimé jusqu'à la pression de transport souhaitée P4 (point 58).

Le chemin thermodynamique (b) se caractérise par une succession de compressions suivies de refroidissements où le fluide est maintenu à l'état gazeux (à droite et à l'extérieur de l'enveloppe caractérisée par la courbe de saturation 50 du fluide) jusqu'à une pression P2 (point 53) inférieure à la pression du point critique 52. Sur cette partie, le chemin thermodynamique (b) est sensiblement identique au chemin thermodynamique (a).

A partir du point 53, le fluide est refroidi pour être totalement liquéfié pour atteindre le point 55 sur la courbe de saturation 50 ou légèrement à gauche de la courbe de saturation 50. Ainsi, au point 55, le fluide est totalement liquide.

Il est ensuite comprimé jusqu'à la pression P4 du point 61 et où il passe à l'état supercritique. Le chemin thermodynamique (c) se caractérise par une succession de compressions suivies de refroidissements où le fluide est maintenu à l'état gazeux (à droite et à l'extérieur de l'enveloppe caractérisée par la courbe de saturation 50 du fluide) jusqu'à une pression P1 (point 51) inférieure à la pression du point critique 52. Sur cette partie, le chemin thermodynamique (c) est sensiblement identique au chemin thermodynamique (a).

A partir du point 51, le fluide est refroidi pour être liquéfié partiellement pour atteindre le point 62 situé sous la courbe de saturation 50 (dans l'enveloppe définie par la courbe de saturation 50). En se trouvant sous la courbe de saturation 50 (dans l'enveloppe définie par la courbe de saturation 50), le fluide est polyphasique comprenant à la fois une portion gazeuse et une portion liquide.

Il est alors comprimé par une pompe polyphasique à une pression P3 (point 63) inférieure à la pression du point critique 52 de manière à rester à l'état polyphasique dans la pompe polyphasique et à éviter le passage à l'état supercritique dans cette pompe polyphasique.

Il est ensuite refroidi pour atteindre une liquéfaction totale d'au moins le dioxyde de carbone du fluide au point 56 situé sur la courbe de saturation 50 ou légèrement à gauche de la courbe de saturation 50. Ainsi, au point 56, le fluide (au moins le dioxyde de carbone du fluide) est totalement liquide.

Il est ensuite comprimé jusqu'à la pression P4 du point 59 via une pompe supercritique et il passe à l'état supercritique.

La figure 4 illustre, de manière schématique et non limitative, les modifications des propriétés thermodynamiques du fluide en fonction du taux d'impuretés contenues dans le dioxyde de carbone.

Le graphique donne en ordonnée la pression P du fluide (en bar, 1 bar équivalent à 0,1 MPa) et en abscisse l'enthalpie (en kJ/kg).

Les différentes courbes F1, F2, F3, F4 sont les courbes de saturation de plusieurs fluides, à savoir :
- F1 est la courbe de saturation d'un fluide contenant 100% de dioxyde de carbone ;
- F2 est la courbe de saturation d'un fluide contenant 95% de dioxyde de carbone et 5% de diazote ;
- F3 est la courbe de saturation d'un fluide contenant 90% de dioxyde de carbone et 10% de diazote ;
- F4 est la courbe de saturation d'un fluide contenant 85% de dioxyde de carbone et 15% de diazote.

On observe que plus le taux d'impuretés (ici le diazote) augmente, plus l'enveloppe de la courbe de saturation augmente et plus la pression critique augmente passant de 74 bar (7,4 MPa) pour le dioxyde de carbone pur à plus de 100 bar (plus de 10 MPa) pour un dioxyde de carbone avec 15% de diazote.

Pour l'optimisation du procédé et du système, la pression critique réelle du fluide peut ainsi être prise en compte afin d'améliorer le rendement et les performances du procédé et du système.

### Exemples

Différents procédés de compression de l'invention ont été dimensionnés pour la compression de dioxyde de carbone pur et ces procédés de l'invention ont ensuite été comparés.

Pour le dimensionnement de ces différents procédés de compression de l'invention, le fluide d'entrée est le dioxyde de carbone pur (sans impuretés) à un débit massique de 156,43 kg/s, à une pression d'entrée de 0,15 MPa, à une température d'entrée de 35°C et à une pression de sortie du procédé de 15,3 MPa.

Le tableau suivant [Tab1] donne les différentes valeurs de pressions et températures correspondantes au chemin thermodynamique (c) de la figure 3 ainsi que des caractéristiques du système de compression associé avec, 1 bar équivalent à 0,1 MPa.

**[Tab1]**

| | | | | | | | | |
|---|---|---|---|---|---|---|---|---|
| Etape a) de compression | Pression P1 en sortie des étages de compression (bar) | 8 | 8 | 15 | 15 | *15* | 40 | 40 |
| | Nombre de compresseurs | 3 | 3 | 4 | 4 | *4* | 6 | 6 |
| | Nombre de troisièmes moyens de refroidissement séparant les compresseurs | 2 | 2 | 3 | 3 | *3* | 5 | 5 |
| | Puissance consommée lors de l'étape a) de compression (MW) | **19.9** | **19.9** | **28.7** | **28.7** | ***28.7*** | **40.9** | **40.9** |
| Etapes b) et c) | Température T2 (°C) en sortie du premier moyen de refroidissement | -45.8 | -45.8 | -26.9 | -26.9 | *26.9* | 5.1 | 5.1 |
| | Fraction volumique de gaz en entrée de la pompe polyphasique (%) | 92 | 88 | 85 | 82 | *78* | 63 | 52 |
| | Puissance consommée par le premier moyen de refroidissement (MW) | ***65.0*** | **48.9** | **32,2** | **41.1** | ***32.5*** | ***33.5*** | ***34.6*** |
| | Pression P3 en sortie de compression polyphasique (bars) | 70.6 | 70.6 | 69.8 | 69.5 | *71.0* | 70.1 | 69.3 |
| | Nombre d'étages de compression polyphasique | 6 | 6 | 4 | 4 | *4* | 2 | 2 |
| | Nombres d'étages de refroidissement entre les étages de compression polyphasique | 3 | 0 | 2 | 1 | *0* | 1 | 0 |
| | Puissance consommée par la pompe polyphasique (MW) | ***11.9*** | ***8.1*** | ***7.8*** | ***6.6*** | ***5.4*** | ***2.4*** | ***2.3*** |
| Etape e) | Pression P5 en sortie de la pompe supercritique (bars) | 153 | 153 | 153 | 153 | *153* | 153.3 | 153 |
| | Puissance consommée par la pompe supercritique (MW) | *3.0* | *2.2* | *2.2* | *2.2* | ***2.2*** | *2.2* | *2.2* |
| TOTAL | Puissance totale consommée par le procédé de compression (MW) | **99.8** | **79.1** | **70.9** | **78.6** | ***68.8*** | **79.0** | **80.0** |

Ces exemples montrent que le procédé de l'invention permettent une compression d'un fluide comportant du dioxyde de carbone avec une puissance totale consommée faible (inférieure à 100 MW). Le chemin thermodynamique le plus avantageux, d'un point de vue consommation énergétique totale, est celui correspondant à la colonne en italique et en police plus grande du tableau [Tab1]. En effet, la puissance de consommation énergétique totale est de 68,8 MW alors que les autres chemins thermodynamiques consomment entre 70,9 MW et 99,8 MW. Ce mode de réalisation peut donc être considéré comme un des modes de réalisation préférés de l'invention.

Pour ce procédé de compression préféré (colonne en italique de [Tab1]), la pression en sortie de l'étape a) est de 15 bar (1,5 MPa), la pression en sortie de l'étape de compression polyphasique c) de 71 bar, soit 7,1 MPa (en dessous de la pression critique de 74 bar, soit 7,4 MPa, pour le dioxyde de carbone pur) et la fraction volumique de gaz du fluide en entrée de la pompe polyphasique est de 78%.

## Revendications

1. Procédé de compression d'un fluide comprenant au moins 80% de dioxyde de carbone, le procédé comprenant au moins les étapes suivantes :
a) on comprime (Comp) le fluide par un ou plusieurs étages de compression jusqu'à une pression (P1) supérieure à 8 bar et strictement inférieure à 50 bar ;
b) on refroidit (Ref1) le fluide comprimé à une température (T1') comprise entre - 50°C et 15°C, la pression (P1) du fluide étant maintenue supérieure à 8 bar et strictement inférieure à 50 bar de manière à liquéfier partiellement le dioxyde de carbone du fluide, la fraction volumique en gaz du fluide étant comprise entre 1% et 99%, **caractérisé en ce que** :
c) on réalise une compression polyphasique (PP) du fluide comprimé et refroidi à une pression (P3) strictement inférieure à la pression critique du fluide, la compression polyphasique étant réalisée en un ou plusieurs étages de compression polyphasique ;
d) de préférence, on refroidit (Ref2) le fluide sortant de la compression polyphasique pour liquéfier totalement au moins le dioxyde de carbone du fluide ;
e) on comprime (PSP) le fluide de manière à ce que la pression (P4) du fluide dépasse le point critique du fluide et de préférence à une température inférieure à 60 °C.

2. Procédé selon la revendication 1, pour lequel on comprime (Comp) le fluide à l'étape a) à l'aide d'un unique compresseur à engrenages intégrés.

3. Procédé selon l'une des revendications précédentes, pour lequel, entre au moins deux étages de compression de l'étape a), on refroidit le fluide pour le maintenir à une température entre 10°C et 100°C.

4. Procédé selon la revendication 3, pour lequel après avoir refroidi le fluide après au moins un étage de compression de l'étape a), on sépare le fluide à l'état liquide du fluide à l'état gazeux.

5. Procédé selon l'une des revendications précédentes, pour lequel, la compression polyphasique (PP) est réalisée par une pompe polyphasique de type hélico-axiale.

6. Procédé selon l'une des revendications précédentes, pour lequel la compression polyphasique (PP) est réalisée par plusieurs étages de compression polyphasique et de préférence, on refroidit le fluide par des refroidisseurs, de préférence, des refroidisseurs à eau, entre au moins deux étages de compression polyphasique.

7. Procédé selon l'une des revendications précédentes, pour lequel le fluide est du dioxyde de carbone comprenant entre 0 et 20% d'impuretés.

8. Procédé selon la revendication 7, pour lequel, après l'étape d) de refroidissement (Ref2) du fluide sortant de la compression polyphasique (PP), lorsque les impuretés comprennent des gaz non condensables, on réalise un traitement du fluide pour réduire la fraction volumique en gaz à une valeur inférieure à 5%, de préférence, par une séparation gaz/liquide.

9. Procédé de transport et de stockage d'un fluide comprenant au moins 80% de dioxyde de carbone, dans lequel on comprime le fluide selon le procédé de compression selon l'une des revendications précédentes, puis on transporte le fluide jusqu'à un site de stockage et on stocke le fluide dans un réservoir de stockage du site de stockage.

## Patentansprüche

1. Verfahren zur Komprimierung eines Fluids, das mindestens 80 % Kohlendioxid umfasst, wobei das Verfahren mindestens die folgenden Schritte umfasst:
a) das Komprimieren (Comp) des Fluids mittels einer oder mehrerer Kompressionsstufen bis zu einem Druck (P1) von mehr als 8 bar und streng weniger als 50 bar;
b) das Kühlen (Ref1) des komprimierten Fluids auf eine Temperatur (T1') zwischen -50 °C und 15 °C, wobei der Druck (P1) des Fluids auf mehr als 8 bar und streng weniger als 50 bar gehalten wird, sodass das Kohlendioxid des Fluids teilweise verflüssigt wird, wobei der Volumenanteil des Gases des Fluids zwischen 1 % und 99 % liegt, **dadurch gekennzeichnet, dass**:
c) eine Mehrphasenkompression (PP) des komprimierten und gekühlten Fluids zu einem Druck (P3) durchgeführt wird, der streng geringer als der kritische Druck des Fluids ist, wobei die Mehrphasenkompression in einer oder mehreren Mehrphasenkompressionsstufen durchgeführt wird;
d) vorzugsweise das aus der Mehrphasenkompression austretende Fluid gekühlt (Ref2) wird, wodurch zumindest das Kohlendioxid des Fluids vollständig verflüssigt wird;
e) das Fluid komprimiert (PSP) wird, sodass der Druck (P4) des Fluids den kritischen Punkt des Fluids übersteigt, und vorzugsweise bei einer Temperatur von weniger als 60 °C.

2. Verfahren nach Anspruch 1, wobei das Fluid in Schritt a) mittels eines einzelnen Getriebekompressors komprimiert (Comp) wird.

3. Verfahren nach einem der vorhergehenden Ansprüche, wobei das Fluid zwischen mindestens zwei Stufen der Kompression von Schritt a) gekühlt wird, wodurch es auf einer Temperatur zwischen 10 °C und 100 °C gehalten wird.

4. Verfahren nach Anspruch 3, wobei nach dem Kühlen des Fluids nach mindestens einer Kompressionsstufe von Schritt a) das Fluid im flüssigen Zustand vom Fluid im gasförmigen Zustand getrennt wird.

5. Verfahren nach einem der vorhergehenden Ansprüche, wobei die Mehrphasenkompression (PP) mit einer Mehrphasenpumpe vom helikoaxialen Typ durchgeführt wird.

6. Verfahren nach einem der vorhergehenden Ansprüche, wobei die Mehrphasenkompression (PP) mit mehreren Mehrphasenkompressionsstufen durchgeführt wird und das Fluid vorzugsweise mit Kühlern, vorzugsweise Wasserkühlern, zwischen mindestens zwei Mehrphasenkompressionsstufen gekühlt wird.

7. Verfahren nach einem der vorhergehenden Ansprüche, wobei es sich beim Fluid um Kohlendioxid handelt, das zwischen 0 und 20 % Verunreinigungen umfasst.

8. Verfahren nach Anspruch 7, wobei nach Schritt d) des Kühlens (Ref2) des aus der Mehrphasenkompression (PP) austretenden Fluids, wenn die Verunreinigungen nicht kondensierbare Gase umfassen, eine Behandlung des Fluids zur Reduzierung des Volumenanteils des Gases vorzugsweise mittels einer Gas/Flüssigkeits-Trennung auf einem Wert von weniger als 5 % durchgeführt wird.

9. Verfahren zum Transport und zur Lagerung eines mindestens 80 % Kohlendioxid umfassenden Fluids, wobei das Fluid gemäß dem Kompressionsverfahren nach einem der vorhergehenden Ansprüche komprimiert und das Fluid dann zu einer Speicherstätte transportiert und das Fluid in einem Speicherbehälter der Speicherstätte gelagert wird.

## Claims

1. Method for compressing a fluid comprising at least 80% carbon dioxide, the method comprising at least the following steps:
a) the fluid is compressed (Comp) in one or more compression stages to a pressure (P1) above 8 bar and strictly below than 50 bar;
b) the compressed fluid is cooled (Ref1) to a temperature (T1') of between -50°C and 15°C, the pressure (P1) of the fluid being maintained above 8 bar and strictly below 50 bar so as to partially liquefy the carbon dioxide in the fluid, the gas volume fraction of the fluid being between 1% and 99%, **characterized in that**:
c) the compressed and cooled fluid is subjected to a multiphase compression (PP) to a pressure (P3) strictly below the critical pressure of the fluid, the multiphase compression being carried out in one or more multiphase compression stages;
d) preferably, the fluid leaving the multiphase compression is cooled (Ref2) to completely liquefy at least the carbon dioxide in the fluid;
e) the fluid is compressed (PSP) such that the pressure (P4) of the fluid exceeds the critical point of the fluid and preferably at a temperature below 60°C.

2. Method according to Claim 1, wherein the fluid is compressed (Comp) in step a) by means of a single integrally geared compressor.

3. Method according to one of the preceding claims, wherein, between at least two compression stages of step a), the fluid is cooled to keep it a temperature between 10°C and 100°C.

4. Method according to Claim 3, wherein, after cooling the fluid after at least one compression stage of step a), the liquid-phase fluid is separated from the gaseous-phase fluid.

5. Method according to one of the preceding claims, wherein the multiphase compression (PP) is carried out using a helico-axial multiphase pump.

6. Method according to one of the preceding claims, wherein the multiphase compression (PP) is carried out in several multiphase compression stages and the fluid is preferably cooled using coolers, preferably water coolers, between at least two multiphase compression stages.

7. Method according to one of the preceding claims, wherein the fluid is carbon dioxide comprising between 0 and 20% impurities.

8. Method according to Claim 7, wherein, after step d) of cooling (Ref2) the fluid leaving the multiphase compression (PP), if the impurities comprise non-condensable gases, the fluid is treated to reduce the gas volume fraction to a value of less than 5%, preferably by gas/liquid separation.

9. Method for transporting and storing a fluid comprising at least 80% carbon dioxide, wherein the fluid is compressed according to the compression method according to one of the preceding claims, and the fluid is then transported to a storage site and the fluid is stored in a storage tank at the storage site.
